# EUROPEAN PATENT APPLICATION

(11) **EP 1 443 380 A2**
(43) Date of publication of application: **04.08.2004**
(21) Application number: 04000644.7
(22) Date of filing: 14.01.2004
(51) Int. Cl.: G06F 1/00

(54) **Contents processing apparatus and contents processing program**

(30) Priority: 14.01.2003 JP 2003006031
(71) Applicant: YAMAHA CORPORATION, Hamamatsu-shi Shizuoka-ken (JP)
(72) Inventor: Tohgi, Yutaka, Hamamatsu-shi Shizuoka-ken (JP); Sadakata, Toshihisa, Hamamatsu-shi Shizuoka-ken (JP); Gregson, Gary, Hamamatsu-shi Shizuoka-ken (JP)
(74) Representative: Emde, Eric

(57) **Abstract**

There is provided a contents processing apparatus, according to which services for use of contents can be easily controlled according to users to ensure desired security. A contents information storage stores contents, a contents management file for managing licenses for the contents, and plug-in modules for executing processing of the contents. A plug-in setting device sets plug-in modules corresponding to contents to be processed. An operation recognition device recognizes unlimited operations relating to execution of processing of the contents from the contents management file corresponding to the contents. A plug-in function permission device permits use of functions corresponding to the recognized operations among functions of the set plug-in modules. A contents processing execution device executes processing of the contents according to the functions of the permitted plug-in modules.

## Description

### BACKGROUND OF THE INVENTION

### Field of the Invention

The present invention relates to a contents processing apparatus and a contents processing program, which can ensure security for downloaded contents.

### Description of the Related Art

Conventionally, a technique has been known in which limitations on the use of contents obtained through a communication network are removed by entering a keyword into an application for using the obtained contents.

It is, however, difficult for a contents provider to control limitations on licenses to use contents according to users, and on the other hand, it is inconvenient for the users to enter a keyword when using the contents. Also, a sound data distributing system has been proposed which enables the user to obtain sound data for audition first and then purchase licensed regular data when purchasing contents on a network (refer to Japanese Laid-Open Patent Publication (Kokai) No. 2001-350479, for example).

However, to remove limitations on the use of contents after downloading audition data, the user has to download the entire regular data, which raises a problem in terms of communication traffic, takes a long period of time, and necessitates repeatedly carrying out similar operations. This is inconvenient for the user.

Namely, the above described conventional sound data distributing system is encountered with various problems because it cannot impose limitations on licenses for contents according to users.

### SUMMARY OF THE INVENTION

It is, therefore, an object of the present invention to provide a contents processing apparatus and a contents processing program, according to which services for use of contents can be easily controlled according to users to ensure desired security.

To attain the above object, in a first aspect of the present invention, there is provided a contents processing apparatus comprises a contents information storage that stores contents, a contents management file for managing licenses for the contents, and plug-in modules for executing processing of the contents, a plug-in setting device that sets plug-in modules corresponding to contents to be processed, an operation recognition device that recognizes unlimited operations relating to execution of processing of the contents to be processed from the contents management file corresponding to the contents to be processed, a plug-in function permission device that permits use of functions corresponding to the unlimited operations recognized by the operation recognition device among functions of the plug-in modules set by the plug-in setting device, and a contents processing execution device that executes processing of the contents to be processed, according to the functions of the plug-in modules permitted by the plug-in function permission device.

According to the first aspect of the present invention, unlimited operations relating to contents processing are recognized from the contents management file corresponding to contents to be processed, functions of the plug-in modules corresponding to the unlimited operations among functions of the plug-in modules are permitted to be used, and processing of the contents is executed according to the permitted functions of the plug-in module. As a result, services for use of contents according to users can be easily controlled to ensure desired security.

Preferably, the contents information storage further stores a plug-in management file for defining executable operative functions of the plug-in modules, the plug-in function permission device permits use of the plug-in modules set by the plug-in setting device according to contents of the plug-in management file, and the contents processing apparatus further comprises an update device that updates the plug-in management file.

According to this arrangement, in execution of contents processing, the contents management file and the plug-in management file doubly manage the operations, and therefore, it is possible to reliably ensure security.

Preferably, the contents processing apparatus is connected to an external apparatus via a communication network, and the contents management file is obtained from the external apparatus via the communication network.

According to this arrangement, the plug-in management file can be updated from an external apparatus via a communication network, and can be changed with an increase or decrease in plug-in modules, and therefore, it is possible to ensure security with flexibility.

Preferably, the contents management file is rewritable and capable of being obtained independently of contents corresponding thereto.

Preferably, the plug-in management file is rewritable and capable of being obtained independently of contents corresponding thereto.

According to these arrangements, the plug-in management file and the contents management file are rewritable, and various kinds of operative control information are described in them, and hence it is possible to make changes to the usage of the contents only by rewriting the management files without downloading contents themselves again. Further, it is possible to realize a contents usage service which is limited according to a user's license without degrading the convenience for a user.

Preferably, the contents are inhibited from being used when there is no contents management file corresponding to the contents, and are also inhibited from being processed when there is no plug-in management file corresponding to the contents.

To attain the above object, in a second aspect of the present invention, there is provided a contents processing program executed by a contents processing apparatus including a contents information storage that stores contents, a contents management file for managing licenses for the contents, and plug-in modules for executing processing of the contents, comprises a plug-in setting module for setting plug-in modules corresponding to contents to be processed, an operation recognition module for recognizing unlimited operations regarding execution of processing of the contents to be processed from the contents management file corresponding to the contents to be processed, a plug-in function permission module for permitting use of functions corresponding to the unlimited operations recognized by the operation recognition module among functions of the plug-in modules set by the plug-in setting module, and a contents processing execution module for executing processing of the contents to be processed, according to the functions of the plug-in modules permitted by the plug-in function permission module.

The above and other objects, features, and advantages of the invention will become more apparent from the following detailed description taken in conjunction with the accompanying drawings.

### BRIEF DESCRIPTION OF THE DRAWINGS

FIG. 1 is a block diagram showing the hardware arrangement of a contents processing apparatus according to an embodiment of the present invention;
FIG. 2 is a diagram schematically showing the structure of data and others stored in a server SV connected to the contents processing apparatus;
FIG. 3 is a diagram schematically showing the structure of data and others stored in the contents processing apparatus (user terminal);
FIG. 4 is a flow chart showing a main process carried out by the user terminal PC;
FIG. 5 is a flow chart showing a continued part of the main process in FIG. 4; and
FIG. 6 is a flow chart showing the operation of the user terminal PC during execution of contents processing.

### DETAILED DESCRIPTION OF THE PREFERRED EMBODIMENTS

The present invention will now be described in detail with reference to the drawings showing a preferred embodiment thereof. In the drawings, elements and parts which are identical throughout the views are designated by identical reference numerals, and duplicate description thereof is omitted.

It should be understood that the present invention is not limited to the embodiment described below, but various variations of the embodiment may be possible without departing from the spirits of the present invention.

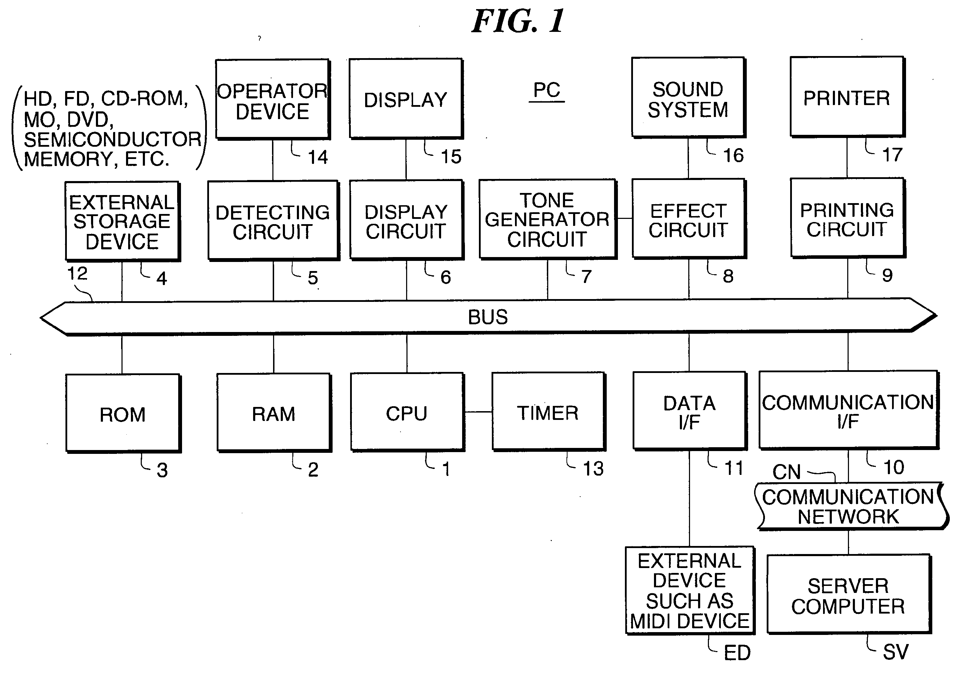

FIG. 1 is a block diagram showing the hardware arrangement of a contents processing apparatus according to an embodiment of the present invention. The contents processing apparatus is called a "user terminal" (or a "client terminal", a "local", or the like), and is implemented by an arbitrary information processing apparatus having a communicating function and various contents information processing functions. In the example shown in FIG. 1, the contents processing apparatus is implemented by a personal computer PC having a communicating function and various media information processing functions. The contents processing apparatus, however, should not necessarily be implemented by general-purpose information processing apparatuses such as personal computers, but may be implemented by various types of information processing apparatuses such as electronic musical apparatuses provided with functions similar to those of the general-purpose information processing apparatuses. In the present embodiment, it is assumed that the contents processing apparatus itself has an image/sound output function.

In FIG. 1, the contents processing apparatus PC is comprised of a central processing unit (CPU) 1, a random access memory (RAM) 2, a read only memory (ROM) 3, an external storage device 4, a detecting circuit 5, a display circuit, a tone generator circuit 7, an effect circuit 8, a printing circuit 9, a communication interface (communication I/F) 10, a data interface (data I/F) 11, and so forth, which are connected to each other via a bus 12.

The CPU 1, which controls the overall operation of the contents processing apparatus PC, carries out various kinds of contents processing according to predetermined control programs, and has a timer 13 which clocks time during execution of programs. For example, the timer 13 is used for determining whether a trial time period of contents information has been elapsed or not when a contents usage program is executed. The RAM 2, which is writable, functions as a working memory including various registers and flags, for temporarily storing various kinds of information required for carrying out various kinds of contents processing. The ROM 3 stores control programs, various data and tables, and so forth for required for the CPU 1 to carry out a contents process or the like. The CPU 1, timer 13, RAM 2, and ROM 3 constitute a signal processing system.

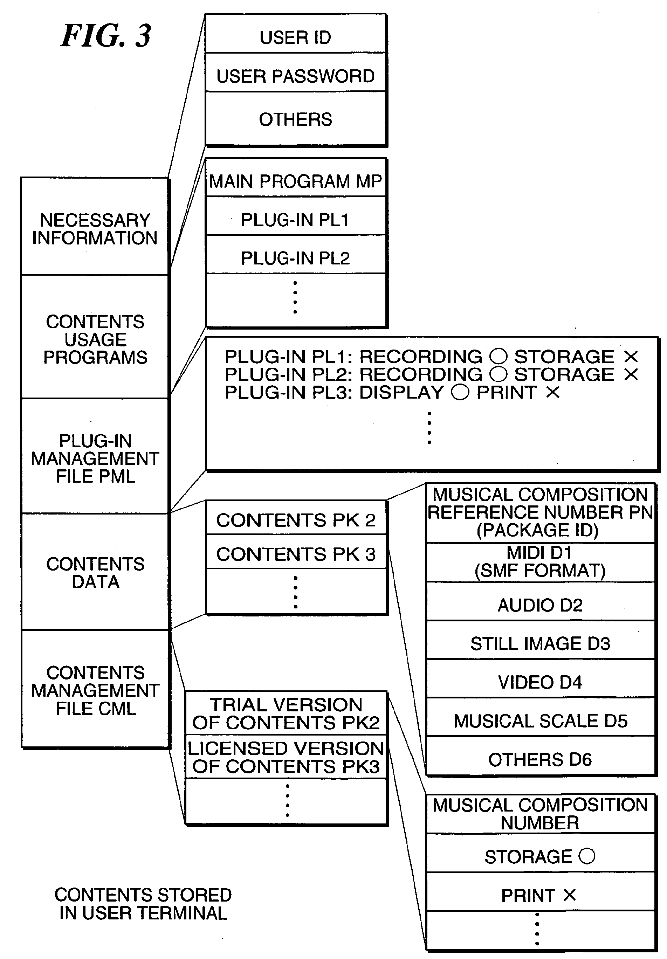

The external storage device 4 is comprised of storage means implemented by any of various storage media such as a hard disk (HD), a compact disk read only memory (CD-ROM), a flexible disk (FD), a magneto-optical (MO) disk, a digital versatile disk (DVD), and a memory card. Even in the case where the control programs and data are not stored in the ROM 3, if the control programs are stored in advance in the external storage device 4 such as the HD or the CD-ROM and read into the RAM 2, the CPU 1 can be operated in the same manner as in the case where the control programs are stored in the ROM 3. For example, by installing various contents information such as contents usage programs and contents data (refer to FIG. 3) relating to contents processing into the HD, it is possible to realize a desired contents processing apparatus and easily add control programs and upgrade the version. The contents information is stored in a contents information storage section, not shown, of the external storage device 4.

The detecting circuit 5 detects operations of various operating elements of an operator device 14 connected to the detecting circuit 5, and enters them to the contents processing apparatus PC. The operating elements of the operator device 14 include a character keyboard and a pointing device (mouse), and so forth, and are used for inputting, for example, instructions for activating various applications and instructions for executing various functions. Further, a performance musical tone input function may be allocated to a predetermined one of the operating elements of the operator device 14 so that actual performance can be made according to a guidance function provided during execution of contents processing.

The display circuit 6 controls what is displayed on a display (including an indicator) 15 connected thereto in accordance with instructions given from the CPU 1. The display 15 has not only a setting display function of displaying various setting screens for various applications, but also an image output function of displaying output screens (such as a screen which shows a musical score, a screen which shows a video, and a screen which shows various parameters) during execution of contents processing.

The tone generator circuit (including a tone generator module) 7, the effect (applying) circuit 8, and a sound system 16 connected to the effect circuit 8 constitute an audio output function section, i.e. a sounding system. Specifically, the tone generator circuit 7 outputs musical tone waveform information corresponding to musical composition information, which is read out from the ROM 3 or the external device 4, to the effect circuit 8. The effect (applying) circuit 8 is implemented by a DSP (Digital Signal Processor), and converts the musical tone waveform information and tone waveform information (audio information) read out from the ROM 3 or the external device 4 into desired audio data. The sound system 16 is comprised of a D/A converter, an amplifier, and speakers, and converts the sound data supplied from the effect circuit 8 into analog form, and then amplifies and sounds the same. The printing circuit 9 controls contents printed out by the printer 17 connected to the printing circuit 9 in accordance with instructions given from the CPU 1, and outputs sheet data required for execution of contents processing or the like in accordance with a contents usage program.

The communication I/F 10 is connected to a communication network CN such as the Internet or a telephone line, and provides interface for transmitting and receiving data to and from an external information processing apparatus such as a server computer (hereinafter referred to as "the Web server" or "the server") SV. For example, if necessary control programs and various data are not stored in the ROM 3 or the external storage device 4, various data such as control programs (contents usage programs (such as a main program and various plug-in modules)), control data (such as a plug-in management file and a contents management file), and contents data (such as a contents package) can be obtained from the server SV via the communication network CN and downloaded into the external storage device 4.

The data I/F 11 provides interface for sending and receiving performance data, and is implemented by a special I/F (cable) such as a MIDI interface, USB interface, IEEE 1394 interface. The data I/F 11 enables the contents processing apparatus PC to send and receive musical composition information (such as MIDI information) and various performance information (such as audio information (tone waveform information), video information, and musical scale information) to and from external devices ED such as a MIDI device and other performance data processing devices.

The server SV is similar in internal construction to the contents processing apparatus PC shown in FIG. 1, and as described above, is capable of supplying various data such as programs and contents to each contents processing apparatus, i.e. each user terminal PC. Specifically, various kinds of information are stored in the hard disk (HD) incorporated in the external storage device 4, so that various kinds of contents information can be distributed as requested by each user terminal PC.

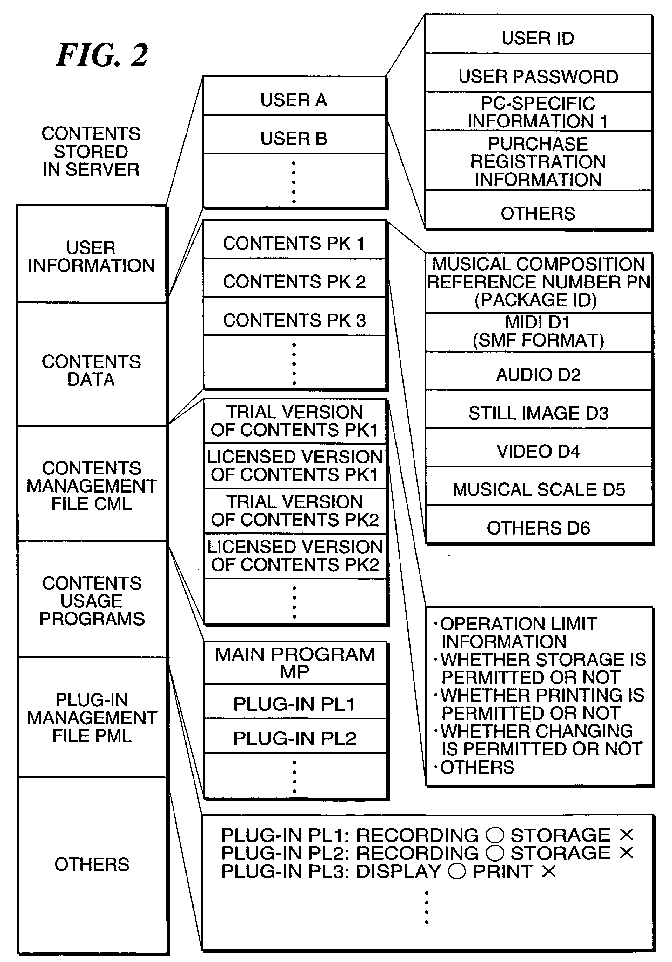

FIG. 2 is a view schematically showing the structure of data and others stored in the server SV connected to the contents processing apparatus (user terminal) PC, and FIG. 3 is a view schematically showing the structure of data and others stored in the contents processing apparatus PC.

As shown in the left-hand column in FIG. 2, for example, the following data are stored in the hard disk (HD) of the server SV: user information; contents information which is comprised of contents data, a contents management file (also referred to as a "contents management list") CML, contents usage programs, and a plug-in management file (also referred to as a "plug-in management list") PML; and "others" including a variety of data such as other kinds of control programs and various media data which can be supplied to each user terminal PC.

The user information is comprised of personal information on users A, B, ... registered in the server SV. The personal information on the respective users A, B, ... are stored separately as shown in the top section of the middle column in FIG. 2. Specifically, the user information on the respective users A, B, ... are each comprised of a user ID, a user password, device-specific information, purchase registration information, and others as shown at the top section of the right-hand column in FIG. 2. The user ID (login ID) is nonconfidential information for identifying a user who uses each contents processing apparatus (user terminal) PC, and the user password is confidential information for officially authenticating a user who is accessing the server SV or using contents.

The device-specific information (PC-specific information) is characteristic information specific to a personal computer (user terminal) PC being used by a user, and can be any unique number such as a MAC address (Media Access Control Address), a HD ID number, or a video card number insofar as they can specify a user terminal PC connected to the network. It should be noted that in the present example, the number of pieces of PC-specific information is the same as the number of PCs being used by a user, and for example, if one PC is used by a user, there is only "PC-specific information 1" as shown in FIG. 2. The PC-specific information is used for coding/encoding (unlocking) contents information such as the plug-in management file PML and the contents management file CML supplied to each user terminal PC.

The purchase registration information is for managing purchase/registration states of various contents information for each user, and is updated each time contents information is updated. For example, contents data (contents package) purchased by the user is registered using a musical composition reference number (contents ID number), and information relating to the purchase of the contents management file CML, contents usage programs, and plug-in management file PML are registered according to types. The "others" information is comprised of other personal information relating to the user and other information required for contents distribution.

The contents data is comprised of data on a large number of contents which can be provided by the server SV. In the present example, as shown in FIG. 2 as well as the second section of the right-hand column in FIG. 2, the contents are comprised of respective contents packages PK1, PK2, PK3, ... each including some kinds of media information as contents elements. Specifically, each contents package PKa (a=1, 2, ...) includes various media information as contents elements such as a musical composition reference number (content package ID) PN for specifying the contents, MIDI musical tone information D1 which represents contents of a musical composition included in the contents in SMF (Standard MIDI File) format, audio information (tone waveform information) D2 which is reproduced according to the musical composition, still image information D3, moving image information (video information) D4, musical scale display aiding information (musical scale information) D5, and "others" D6 including information representative of a lesson function.

Although in the present example, each contents package PKa includes MIDI musical tone information D1 as a main contents element, and the information PN for specifying each contents package PKa is referred to as the musical composition reference number, this is not limitative, but depending on contents packages, there may be a case where the MIDI musical tone information D1 is omitted. This is the case with the other contents elements D2 to D6 as well.

The contents management file CML is comprised of license information relating to permission of the use of the contents packages PK1, PK2, PK3, ... , and defines operations limited in terms of contents usage, e.g. how each contents package can be used, according to the contents packages PK1, PK2, PK3, ... . For example, as shown in the second section of the middle column in FIG. 2, publication licenses such as a "trial version" and a "licensed version" which can be obtained by a user are provided for each of the contents packages PK1, PK2, PK3, ..., and operation limit information varies according to the publication licenses. In the present example, as shown in the third section (the lowest section) of the right-hand column in FIG. 2, a permissible operation range in processing of each contents package is specified by physical or temporal limitations such as whether storage is permitted or not, whether printing is permitted or not, and whether changing (edition) is permitted or not.

More specifically, the contents management CML file includes the following (1) to (5), for example:
(1) a contents name (number): e.g. 20 characters in text format;
(2) a publication license: trial version/licensed version;
(3) a location (HD) in each user terminal (local) PC where each contents package PKa is to be recorded;
(4) a limitation on preview time: which depends on an OP's (original publisher's) intention and hence differs according to contents (musical composition reference numbers (contents ID numbers)) (there may be no temporal limitation); e.g. MIDI reproducing time period=20 seconds, an audio reproducing time period=20 seconds, video reproducing time period=20 seconds, and the number of pages of a musical scale to be displayed=one page.
(5) action security: actions permitted to be taken in each contents package PKa can be limited according to conditions of the publication license obtained by a user (limitations imposed on actions cover the following functions (although this is not limitative)), and determined in dependence on an OP's intention and hence differ according to contents packages PKa; e.g. edition=YES(permit)/NO(not permit) (NO by default), redistribution=YES(permit)/NO(not permit) (NO by default), review (including rendering of audio/video/MIDI)=YES (permit)/NO(not permit) (NO by default), and printing=YES(permit)/NO(not permit) (NO by default).

It should be noted that in the above example, the limitation on preview time (4) is imposed on in the case where the publication license (2) is a "trial version". The user terminal PC has a so-called "preview mode" in which each contents package PKa is reproduced according to a "trial version" of the contents management file CML. On the other hand, no temporal limitation in preview is imposed on a "licensed version", and hence if a user purchases the "licensed version", he/she is basically permitted to use contents without limitations, and in particular, he/she can fully use the contents with no particular quantitative limitations being imposed except for the number of times printing can be performed or the like. The user terminal PC has a so-called "full mode" in which each contents package PKa is reproduced according to a "licensed version" of the contents management file CML. Regarding the action security (5) as above, however, there may be a case where limitations are imposed on the "licensed version" due to circumstances of the OP. For example, as for printing, the number of times printing can be performed may be limited in a license context, and in this case, even if printing is permitted, the number of times printing can be performed is limited.

The contents management file CML as well as any contents package PKa to be purchased is downloaded in advance into the user terminal PC, and when identified by a contents usage program during execution of contents processing, the contents package PKa becomes usable (e.g. capable of being read out the RAM 2), and the contents processing is permitted to be executed within only the range specified by operation limit information. It should be noted that operations to be limited may be changed by rewriting the contents management file CML according to an instruction from the OP after the contents are released from the server SV; i.e. operations permitted at first may be limited later and vice versa.

The contents usage programs are software programs for using contents provided by the server SV, and are comprised of a main program MP for performing overall processing relating to the use of contents, and reproducing programs (plug-in modules) PL1, PL2, ... called "plug-ins" exclusively for various media information. The main program MP has a sequencer function of simply giving instructions for reproduction of various media information (contents elements) D1, D2, ... included in each contents package PKa, and also has a function of managing various plug-in modules PL1, PL2, ... .

Each of the plug-in modules (hereinafter referred to as "the plug-ins") PL1, PL2, ... are functional programs prepared according to media types and specialized for reproducing the respective media information (contents elements) D1, D2, ..., and has a plurality of operative functions. The operative functions include a reproducing function as a main function, a recording function, a storing (transcribing) function, an editing function, a printing function, and a copying function. The plug-ins PL1, PL2, ... carry out the following respective reproducing processing (1) to (5), for example:
(1) the plug-in PL1 (MIDI musical tone information automatic performance processing): to reproduce (automatically perform) the MIDI musical tone information D1 of a contents package PKa selected by a user (the MIDI information D1 can express the corresponding musical tones in SMF 0.1 format, but may also express the same in another format);
(2) the plug-in PL2 (audio information reproducing processing): to reproduce the audio information (tone waveform information) D2 of the contents package PKa (the audio information D2 can express the corresponding audio waveforms in MP3 (Mpeg Audio Layer 3). but may also express the same in another format));
(3) the plug-ins PL3 and PL4 (still image information and moving image information display processing): to reproduce (display) the still image information D3 and the moving image information D4 of the contents package PKa (the still image information D3 and the moving image information D4 can express corresponding still images and moving images in JPEG (Joint Photographic Expert Group) format or BMP (BitMap) format, and in MPEG 1 (Motion Picture Expert Group 1) format or AVI (Audio Visual Interleaved) format, respectively, but may also express the same in other formats);
(4) the plug-in PL5 (on musical scale information display processing): to read out MIDI musical tone information D1 and the corresponding musical scale display aiding information D5 of the contents package PKa to form musical scale image data, and display (reproduce) musical scale images page by page on the display 15 (the musical scale image data can be formed in scorch XF format, but may also express the same in another format); and
(5) the plug-in PL6 (lesson function, for example): to reproduce guide information (D6) corresponding to the MIDI musical tone information D1 in the contents package PKa.

The plug-in management file PML is comprised of plug-in use right information which permits the plug-ins PL1, PL2 ... to be executed, and defines executable operative functions (referred to as "the functionalities of plug-ins") for the respective plug-ins PL1, PL2, ... . For example, as shown in the lowest section of the middle column in FIG. 2, the plug-ins PL1 and PL2 are permitted to initially record data in the HD of each user terminal PC ("RECORDING"="○"), but not permitted to store (transcribe) the data in other recording media than the HD of the user terminal PC ("STORAGE"="X"). The plug-in 3 is permitted to output display data to the display circuit 6 ("DISPLAY"="○"), but not permitted to cause the printing circuit 9 to print out the data ("PRINT"=" X").

On the other hand, as shown in the left-hand column in FIG. 3, for example, in the contents information storage section of the hard disk (HD) of the user terminal PC, contents information comprised of contents usage programs, plug-in management file PML, contents data, and contents management file CML is stored successively to necessary information (user information). The contents information can be downloaded as needed from the server SV when necessary. The contents usage programs and the contents data can also be installed from a portable recording medium such as a CD-ROM.

The necessary information is user's personal information required when a user uses contents using his/her user terminal PC, and corresponds to each user information registered in the server SV. For example, as shown in the top section of the middle column in FIG. 3, the necessary information is comprised of a user ID, a user password, and other information. The other information includes purchase registration information relating to the user who uses the user terminal PC. The purchase registration information of the user terminal PC is updated at the same time when the purchase registration information of the server SV is updated each time contents information is downloaded or installed from the server SV or a portable recording medium.

As shown in the second and third sections of the middle column in FIG. 3, the contents usage programs and the plug-in management file PML of the user terminal PC are identical in structure with those of the server SV (FIG. 2), and can be downloaded from the server SV. The plug-in management file PML of the user terminal PC is encoded according to device (PC)-specific information on the user terminal PC, recorded in the HD, and read out together with plug-ins required for execution of contents processing. The readout plug-in management file PML is decoded (unlocked) according to the PC-specific information so as to make the functions of the plug-ins effective. Thus, the plug-ins PL1, PL2, ... can be used only by the present user terminal PC, and cannot be used by other user terminals.

It should be noted that the plug-ins PL1, PL2, ...as well as the plug-in management file PML and the contents data to be previewed are lent for free (or at a relatively low price) with limitations being imposed, e.g. a trial time period of 30 days in advance of purchase, so that the contents data can be tried in a preview mode (an unregistered state). In this case, when they are installed, this fact is recorded as purchase registration information in the user terminal PC and the server SV, and when a trial time period has expired from the date of installation, they become unusable.

The plug-in management file PML of the user terminal PC can be updated by update information obtained from the server SV via the communication network CN, and according to the update, a plurality of operative functions of the corresponding plug-ins PL1, PL2 ... become usable or unusable. Further, with an increase or decrease in plug-ins newly provided from the server SV, the functions permitted by the plug-in management file PML are changed.

As shown in the fourth and lowest sections of the middle column in FIG. 3 and the right-hand column in FIG. 3, the contents data and the contents management file CML of the user terminal PC are identical in structure with those of the server SV (FIG. 2), and can be downloaded by a contents purchasing process. In the example shown in the lowest section of the right-hand column in FIG. 3, in the contents management file CML as license information on the corresponding contents package, a "trial version" license is given to a contents package PK2. The contents package PK2 is permitted to be stored (○), but not permitted to be printed (X), and limited in terms of e.g. preview time, not shown. The contents management file CML is also coded according to device (PC)-specific information on the user terminal PC, and the plug-ins PL1, PL2, ... can be used only by the present user terminal PC.

The contents management file CML can also be downloaded together with contents data or singly in association with contents from the storage means (HD) of the server SV into the user terminal PC via the communication network CN according to a request from the user terminal PC. In this case, the contents management file CML can be incorporated into the contents, or separated from the contents and managed in association with each contents package.

When each contents package is processed in the user terminal PC, a single plug-in management file PML, which is provided in each user terminal PC, for managing operative functions according to the plug-ins, and the contents management file CML, which is provided for contents PC, for managing operations according to the contents, and the two management files can doubly manage operations that can be executed by the user terminal PC. It should be noted that processing of contents in the preview mode using a "trial version" of the contents management file CML is referred to as "execution of trial version contents", and processing of contents in the full mode using a "licensed version" of the contents management file CML is referred to as "execution of licensed version contents".

The management files CML and PML are rewritable. Further, since various operation control information is described in the management files CML and PML, only the management files CML and PML can be rewritten without downloading again contents packages themselves, so that changes can be made to the usage of the contents. It should be noted that a contents package is not permitted to be used (e.g. read out onto the RAM 2) unless both the contents package and the corresponding contents management file (contents license information) are available. Further, various operative functions of a plug-in which executes reproduction of each contents element does not become effective unless a plug-in management file CML supports the plug-in.

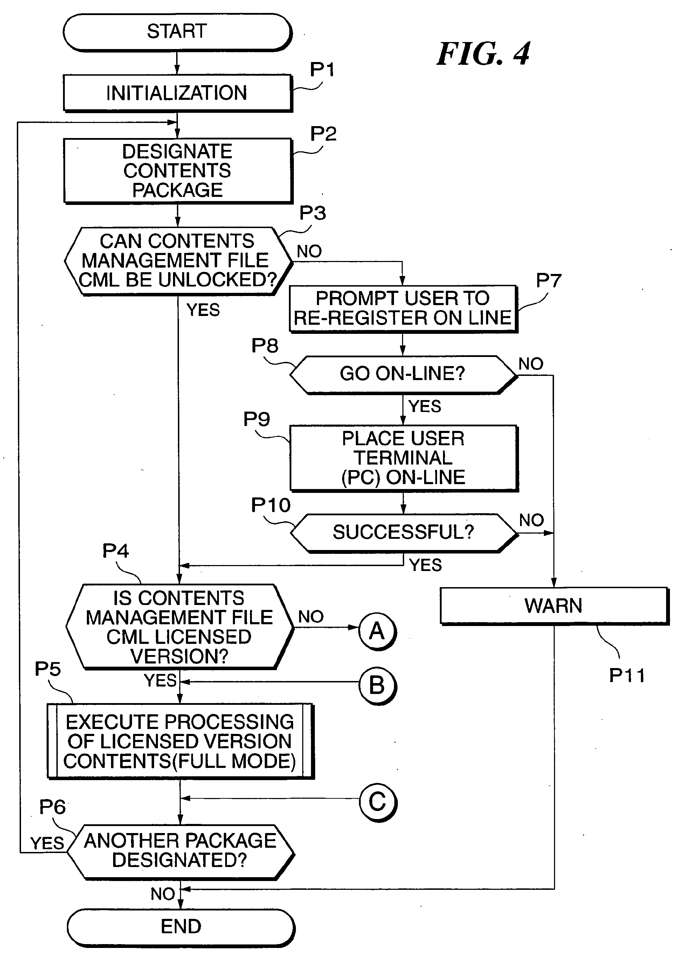

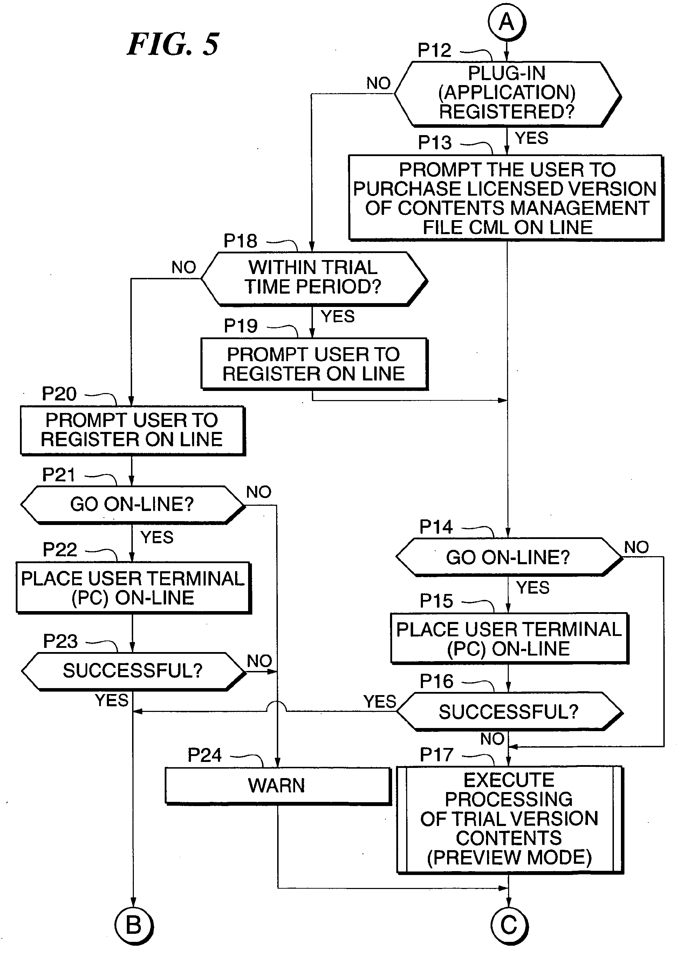

FIGS. 4 and 5 are flow charts of a main process carried out by the user terminal PC. When the main process is started in accordance with a main program MP of the user terminal PC, the CPU 1 initializes each component part of the user terminal PC (step P1), and then displays a contents list on a contents guide screen on the display 15. When the user designates a desired contents package PKa in the contents list, the CPU 1 performs processing to designate the contents package PKa in the contents information storage section of the contents menu external storage device (HD) 4 and read out the same onto the RAM 2 (step P2).

Then, the CPU 1 checks whether the contents management file CML corresponding to the contents package PKa can be unlocked or not (step P3). If the contents management file CML can be unlocked ("YES" to the step P3), the CPU 1 unlocks and reads out the contents management file CML from the contents information storage section (HD) of the external storage device 4 onto the RAM 2, and determines whether or not the contents management file CML is a "licensed version" which permits full access (step P4). If the contents management file is a "licensed version" ("YES" to the step P4), it is possible to fully access and reproduce the contents package PKa, and hence. the CPU activates the plug-ins PL1, PL2, ...according to user's instructions for execution and according to contents types D1, D2, ... to execute processing of contents in the full mode (step P5: "execution of licensed version contents" routine).

After fully executing the processing of contents in the contents package PKa according to the plug-ins, the CPU 1 detects whether another contents package PKb (b=1, 2... where b≠a) has been designated or not (step P6). If another contents package PKb has been designated ("YES" to the step P6), the process returns to the package designation step (P2), and if not, the main process is terminated.

On the other hand, if determining that the contents management file CML cannot be unlocked ("NO" to the step P3), this means that changes have been made to the user terminal PC or the user terminal PC has a pirated version of the contents, and therefore the CPU 1 prompts the user to access the server SV to "register on line" by e.g. indication on the display 15 (step P7). Specifically, in this case, since the user changes information specific to the user terminal PC itself or has a pirated version of the contents, the CPU 1 prompts the user to go on-line and re-register in the contents usage system on line to obtain a new contents management file CML. If the user does not do this, the system does not permit the user to use the contents.

After prompting as above (step P7), the CPU 1 detects whether or not the user has performed an operation for going on-line (step P8), and if the user has performed an operation for going on-line ("YES" to the step P8), the CPU 1 places the user terminal PC on-line to access the server SV (step P9). Specifically, by placing the user terminal PC on-line (step P9), an attempt is made to update user information in the server SV to re-register the user and download a new contents management file CML. Then, the CPU 1 determines whether the attempt has turned out to be successful (step P10), and if the attempt has turned out to be successful ("YES" to the step P10), the process proceeds to the above described step of checking whether or not the contents management file CML is a "licensed version" (full access) (step P4).

On the other hand, if the user has not performed an operation for going on-line ("NO" to the step P8), the CPU 1 warns the user to re-register on line and obtain a new contents management file CML (step P11), and then terminates the main process. If the attempt has turned out to be unsuccessful ("NO" to the step P10), the CPU 1 informs the user of this and warns the user to access a customer service for the server SV and go through necessary registration procedures (step P11), and then terminates the main process.

If the contents management file CML is not a "licensed version" ("NO" to the step P4), the CPU 1 checks whether applications, i.e. plug-ins required for processing the contents package PKa is registered or not (FIG. 5: step P12). If the plug-ins are registered ("YES" to the step P12), the CPU 1 prompts the user to purchase a "licensed version" of the contents management file CML by e.g. indication on the display 15 to make the contents effective (step P13).

After in this way, prompting the user to purchase a "licensed version" of the contents management file CML made to be the full mode (step P13), the CPU 1 detects whether the user has performed an operation for going on-line (step P14), and if the user has performed an operation for going on-line ("YES" to the step P14), the CPU 1 places the user terminal PC on-line to access the server SV, and attempts to download a "licensed version" of the contents management file CML according to the user's operation (step S15). Then, the CPU 1 determines whether the attempt has turned out to be successful or a failure (step P16), and if the attempt has turned out to be successful ("YES" to the step P16), the process proceeds to the above described "execution of trial version contents" routine (FIG. 4: step P5).

On the other hand, if the attempt has turned out to be unsuccessful ("NO" to the step P16), or if the user has not performed an operation for going on-line ("NO" to the step P14), the process enters the "execution of trial version contents" routine to execute processing of the contents in the contents package PKa in the preview mode according to the corresponding "trial version" contents management file CML and plug-ins (step P17). When the "execution of trial version contents" routine is completed, the process proceeds to the above described step of detecting whether another package has been designated or not (FIG. 4: step P6).

On the other hand, if no plug-in is registered ("NO" to the step P12), the CPU 1 checks whether the elapsed time period is within a trial time period (e.g. 30 days) for the plug-ins or not (step P18). If the elapsed time period is within the trial time period ("YES" to the step P18), the CPU 1 prompts the user to register on line to obtain a license (purchase "licensed versions" of the contents management file PML and plug-ins PL1, PL2, ...) by e.g.,indication on the display 15 (step P19), and the process then proceeds to the above described step of detecting whether the user has performed an operation for going on-line (step P14).

On the other hand, if the elapsed time period is not within the trial time period ("NO" to the step P18), the CPU 1 prompts the user to register plug-ins on line (purchase "licensed versions" of the contents management file PML and plug-ins PL1, PL2, ...) (step P20), and then the CPU 1 detects whether the user has performed an operation for going on-line or not (step P21). If the user has performed an operation for going on-line ("YES" to the step P21), the CPU 1 places the user terminal PC on-line to the server SV and attempts to download the plug-ins and others according to the user's operation (step P22). Then, the CPU 1 determines whether the attempt has turned out to be successful (step P23), and if the attempt has turned out to be successful ("YES" to the step P23), the process proceeds to the above described "execution of licensed version contents" routine (FIG. 4: step P5).

On the other hand, if the attempt has turned out to be unsuccessful ("NO" to the step P23), or if the user has not performed an operation for going on-line ("NO" to the step P21), the CPU 1 issues a warning such as "to continue the preview mode, you have to register plug-ins, etc." to the user (step P24), and the process then proceeds to the above described step of detecting whether another package has been designated or not (FIG. 4: step P6).

If the process proceeds from the warning step (step P24) or the routine for executing processing of contents (FIG. 4: step P5 and FIG. 5: step P17) to the step of detecting whether another contents package has been designated or not (FIG. 4: step P6), the process returns to the package designating step (step P2) each time another contents package PKb is designated ("YES" to the step P6), the above described steps (steps P2 to P24) are executed again for a newly designated package PKb, and when no other package is designated ("NO" to the step P6), the main process is terminated.

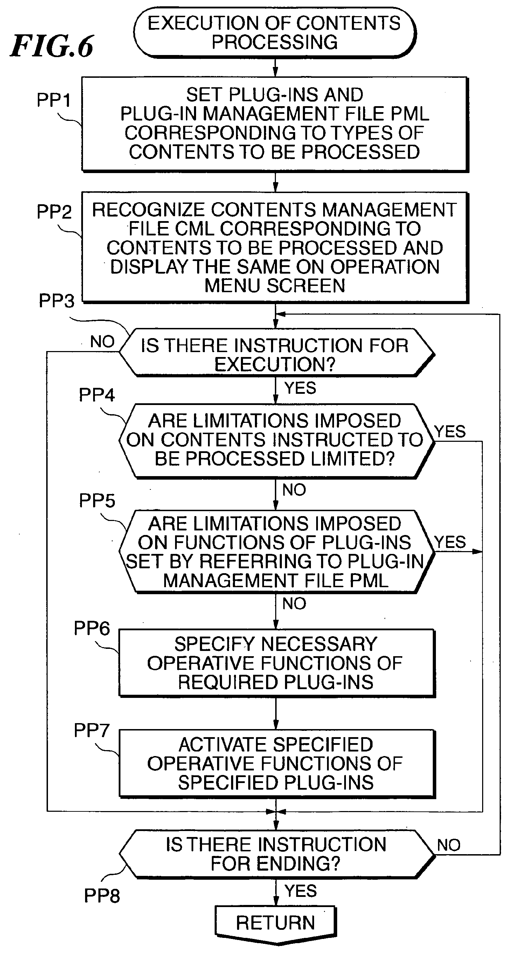

FIG. 6 is a flow chart showing the operation of the user terminal PC in execution of contents processing. A "contents execution" process of this flow chart is carried out in the "execution of licensed version contents" (full mode) routine (FIG. 4: step P5) and the "execution of trial version contents" routine (preview mode) (FIG. 5: step P17) of the main process. The CPU 1 determines plug-ins PL1, PL2, ... to be used for executing processing of respective contents elements according to types of contents elements D1, D2, ... included in the contents package PKa designated for execution in the contents package designating step (FIG. 4: step P2), and designates a plug-in management file PML (refer to the third section of the middle column in FIG. 3) corresponding to the determined plug-ins PL1, PL2, ... to set plug-ins and plug-in management file required for the execution of contents processing (step PP1).

At the same time, information on limitations imposed on the contents management file CML corresponding to the contents package PKa is recognized, and an operation menu screen for the contents package PKa is displayed on the display 15 (step PP2). In accordance with guidance provided by the operation menu screen, the user can designate various operations relating to the execution of contents processing as desired. For example, the user can reproduce the contents elements D1, D2, ... included in the contents package PKa at the same time or independently of each other and execute various kinds of processing such as recording, storing, printing, editing (changing), transferring, and copying.

The CPU 1 detects whether or not the user has given an instruction for executing a desired operation to be executed (step PP3), and if the user has given an instruction for executing his/her desired operation ("YES" to the step PP3), the CPU 1 refers to the information on limitations imposed on the contents management file CML to check whether or not limitations are imposed on the operation designated by the user (step PP4). If no limitations are imposed on the operation designated by the user ("NO" to the step PP4), the CPU 1 refers to the plug-in management file PML to check whether or not limitations are imposed on operative functions of the plug-ins PL1, PL2, ... relating to the operation designated by the user (step PP5).

If no limitations are imposed on the operative functions of the plug-ins PL1, PL2, ... relating to the operation designated by the user ("NO" to the step PP5), the CPU 1 specifies the operative functions of the plug-ins PL1, PL2, ... required for carrying out the designated operation to be executed (step PP6). Then, the CPU 1 activates the specified operative functions of the plug-ins PL1, PL2 , ... , and executes processing of the contents elements D1, D2, ... according to user's instructions for execution in a limited range permitted by the contents management file CML according to the activated operative functions of the plug-ins PL1, PL2, ... (step PP7).

Further, after the execution of contents processing (step PP7) is started, if limitations are imposed on functions of the contents management file CML ("YES" to the step PP4), or limitations are imposed on the functions of the plug-ins PL1, PL2, ... by the plug-in management file PML ("YES" to the step PP5), the CPU 1 detects whether or not the user has given an instruction for terminating the "contents execution" process (step PP8). If the user has not given an instruction for terminating the "contents execution" process ("NO" to the step PP8), the process returns to the above described step of detecting whether or not the user has given an instruction for executing a desired operation (step PP3), and the above described steps (steps PP3 to PP7) are executed again until the instruction for terminating the "contents execution" process is given. If there is an instruction for terminating the "contents execution" process ("YES" to the step PP8), the "contents execution" process is terminated, and the process returns to the above described step of the main process in which it is detected whether another package has been designated or not (FIG. 4: step P6).

As described above, according to the present embodiment, unlimited operations relating to contents processing are recognized from a contents management file (CML) corresponding to contents to be processed, functions of plug-in modules corresponding to the unlimited operations among functions of the plug-in modules are permitted to be used, and the contents are processed according to the permitted functions of the plug-in module. As a result, it is possible to easily control services for use of contents according to users, and to ensure desired security.

Further, a plug-in management file (PML) defines the functionalities (executable operative functions) of the plug-in modules which execute processing of the contents with behaviors of the plug-in modules being included in licenses, and in execution of contents processing, the contents management file (CML) and the plug-in management file (PML) doubly manage the operations, and therefore, it is possible to ensure security. Further, the plug-in management file (PML) can be updated from a server (SV) via a communication network (CN), and can be changed with an increase or decrease in plug-in modules, and therefore, it is possible to ensure security with flexibility.

Further, since a plug-in management file (PML) in each user terminal (PC) and a contents management file (CML) for each content package are rewritable, and various operation control information is described in them, it is possible to make changes to contents usage only by rewriting the management files (PML and CML) without downloading contents (PK1, PK2, ...) themselves again. Further, it is possible to realize a contents usage service limited according to a user's license without degrading the convenience for a user.

Further, contents (PK1, PK2, ...) cannot be used at all without a contents management file (CML) as license information being provided therefor, and unless operative functions of plug-in modules (PK1, PK2, ...) are defined as being "executable" by a plug-in management file (PML), the contents cannot be processed according to the operative functions of the plug-in modules (PK1, PK2, ...). These management files (CML and PML) can be easily encoded according to information specific to a licensed user terminal (PC), and hence it is possible to protect a copyright by inhibiting the contents from being used by other user terminals.

It goes without saying that the object of the present invention may also be accomplished by supplying a system or an apparatus with a storage medium (or a recording medium) in which a program code of software, which realizes the functions of the above described embodiment is stored, and causing a computer (or CPU or MPU) of the system or apparatus to read out and execute the program code stored in the storage medium.

In this case, the program code itself read from the storage medium realizes the functions of the above described embodiment, and hence the program code and a storage medium on which the program code is stored constitute the present invention.

Further, it is to be understood that the functions of the above described embodiment may be accomplished not only by executing the program code read out by a computer, but also by causing an OS (operating system) or the like which operates on the computer to perform a part or all of the actual operations based on instructions of the program code.

Further, it is to be understood that the functions of the above described embodiment may be accomplished by writing the program code read out from the storage medium into a memory provided in an expansion board inserted into a computer or a memory provided in an expansion unit connected to the computer and then causing a CPU or the like provided in the expansion board or the expansion unit to perform a part or all of the actual operations based on instructions of the program code.

Further, the above program has only to realize the functions of the above-mentioned embodiment on a computer, and the form of the program may be an object code, a program executed by an interpreter, or script data supplied to an OS.

Examples of the storage medium for supplying the program code include a floppy (registered trademark) disk, a hard disk, a magnetic-optical disk, a CD-ROM, a CD-R, a CD-RW, a DVD-ROM, a DVD-RAM, a DVD-RW, a DVD+RW, a magnetic tape, a nonvolatile memory card, and a ROM. Alternatively, the program is supplied by downloading from another computer, a database, or the like, not shown, connected to the Internet, a commercial network, a local area network, or the like.

## Claims

1. A contents processing apparatus comprising:
a contents information storage that stores contents, a contents management file for managing licenses for the contents, and plug-in modules for executing processing of the contents;
a plug-in setting device that sets plug-in modules corresponding to contents to be processed;
an operation recognition device that recognizes unlimited operations relating to execution of processing of the contents to be processed from the contents management file corresponding to the contents to be processed;
a plug-in function permission device that permits use of functions corresponding to the unlimited operations recognized by said operation recognition device among functions of the plug-in modules set by said plug-in setting device; and
a contents processing execution device that executes processing of the contents to be processed, according to the functions of the plug-in modules permitted by said plug-in function permission device.

2. A contents processing apparatus according to claim 1, wherein:
said contents information storage further stores a plug-in management file for defining executable operative functions of the plug-in modules;
said plug-in function permission device permits use of the plug-in modules set by said plug-in setting device according to contents of the plug-in management file; and
the contents processing apparatus further comprises an update device that updates the plug-in management file.

3. A contents processing apparatus according to claim 1, wherein the contents processing apparatus is connected to an external apparatus via a communication network, and the contents management file is obtained from the external apparatus via the communication network.

4. A contents processing apparatus according to claim 1, wherein the contents management file is rewritable and capable of being obtained independently of contents corresponding thereto.

5. A contents processing apparatus according to claim 2, wherein the plug-in management file is rewritable and capable of being obtained independently of contents corresponding thereto.

6. A contents processing apparatus according to claim 2, wherein the contents are inhibited from being used when there is no contents management file corresponding to the contents, and are also inhibited from being processed when there is no plug-in management file corresponding to the contents.

7. A contents processing program executed by a contents processing apparatus including a contents information storage that stores contents, a contents management file for managing licenses for the contents, and plug-in modules for executing processing of the contents, comprising:
a plug-in setting module for setting plug-in modules corresponding to contents to be processed;
an operation recognition module for recognizing unlimited operations regarding execution of processing of the contents to be processed from the contents management file corresponding to the contents to be processed;
a plug-in function permission module for permitting use of functions corresponding to the unlimited operations recognized by said operation recognition module among functions of the plug-in modules set by said plug-in setting module; and
a contents processing execution module for executing processing of the contents to be processed, according to the functions of the plug-in modules permitted by said plug-in function permission module.
